(19) Europäisches Patentamt / European Patent Office / Office européen des brevets

(11) **EP 3 907 793 B1**

(12) **EUROPEAN PATENT SPECIFICATION**

(45) Date of publication and mention
of the grant of the patent:
**03.01.2024 Bulletin 2024/01**

(21) Application number: **20738916.4**

(22) Date of filing: **02.01.2020**

(51) International Patent Classification (IPC):
*H01M 4/485* (2010.01)   *H01M 4/505* (2010.01)
*H01M 4/525* (2010.01)   *H01M 4/62* (2006.01)
*H01M 10/054* (2010.01)   *C01G 45/12* (2006.01)
*C01G 49/00* (2006.01)   *H01M 4/131* (2010.01)

(52) Cooperative Patent Classification (CPC):
**C01G 49/0072; C01G 45/1221; C01G 49/0027;
H01M 4/131; H01M 4/485; H01M 4/505;
H01M 10/054;** C01P 2004/61; C01P 2004/62;
C01P 2006/12; C01P 2006/82; H01M 2004/028;
Y02E 60/10

(86) International application number:
**PCT/CN2020/070137**

(87) International publication number:
**WO 2020/143533 (16.07.2020 Gazette 2020/29)**

(54) **POSITIVE ELECTRODE ACTIVE MATERIAL AND ITS PREPARATION METHOD, SODIUM ION BATTERY AND APPARATUS CONTAINING THE SODIUM ION BATTERY**

POSITIVELEKTRODENAKTIVMATERIAL UND HERSTELLUNGSVERFAHREN DAFÜR, NATRIUM-IONEN-BATTERIE UND VORRICHTUNG MIT NATRIUM-IONEN-BATTERIE

MATÉRIAU ACTIF D'ÉLECTRODE POSITIVE ET SON PROCÉDÉ DE PRÉPARATION, BATTERIE AU SODIUM-ION ET DISPOSITIF COMPRENANT UNE BATTERIE AU SODIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2019 CN 201910026508**

(43) Date of publication of application:
**10.11.2021 Bulletin 2021/45**

(73) Proprietor: **Contemporary Amperex Technology Co., Limited**
**Ningde City, Fujian PRC 352100 (CN)**

(72) Inventors:
• **LIU, Qian**
  **Ningde, Fujian 352100 (CN)**
• **LIN, Wenguang**
  **Ningde, Fujian 352100 (CN)**
• **LIANG, Chengdu**
  **Ningde, Fujian 352100 (CN)**
• **GUO, Yongsheng**
  **Ningde, Fujian 352100 (CN)**

(74) Representative: **Boult Wade Tennant LLP**
**Salisbury Square House**
**8 Salisbury Square**
**London EC4Y 8AP (GB)**

(56) References cited:
**EP-A1- 3 048 659       CN-A- 108 963 233
CN-B- 104 617 288**

• LINQIN MU ET AL: "Prototype Sodium-Ion Batteries Using an Air-Stable and Co/Ni-Free O3-Layered Metal Oxide Cathode", ADVANCED MATERIALS, vol. 27, no. 43, 5 October 2015 (2015-10-05), pages 6928-6933, XP055268591, DE ISSN: 0935-9648, DOI: 10.1002/adma.201502449 & MU LINQIN ET AL: "Prototype Sodium-Ion Batteries Using an Air-Stable and Co/Ni-Free O3-Layered Metal Oxide Cathode- Supporting Information", ADVANCED MATERIALS, vol. 27, no. 43, 5 October 2015 (2015-10-05), pages 6928-6933, XP055886719, DE ISSN: 0935-9648, DOI: 10.1002/adma.201502449

**Description**

**TECHNICAL FIELD**

This application belongs to the technical field of energy storage apparatuses, and specifically involves a positive electrode active material and its preparation method, a sodium ion battery, and an apparatus containing the sodium ion battery.

**BACKGROUND TECHNOLOGY**

At present, a lithium-ion battery dominates the power battery. Nevertheless, the lithium-ion battery is facing a great challenge, such as the increasing shortage of lithium resources, the continuous increase of upstream material price, the sluggish development of recycling technology, and a low recycling rate of old and used batteries. Sodium ion batteries can realize charging and discharging by a sodium ion intercalation-deintercalation process between positive and negative electrodes. Moreover, compared with lithium, sodium has the advantages of much richer reserves, wider distribution, and lower cost. Therefore, the sodium ion battery is likely to become a new generation of electrochemical system to replace the lithium-ion battery. However, positive active materials for a sodium ion battery under extensive research at present have relatively poor actual capacity and cycle performance, which hinders the commercialization progress of sodium ion battery. EP 3 048 659 A1 discloses layered oxide materials made of Na, Cu, Fe and Mn and being doped either with Mg or with A1 and a process to prepare them.

**SUMMARY**

The invention is set out in the appended claims.
Compared with the existing technologies, this application at least has the following beneficial effects.
The positive electrode active material provided in this application satisfies a particular chemical formula and the positive electrode active material has a specific chemical composition and water content, which enable the positive electrode active material to have relatively high ionic and electronic conductivity, and which is also beneficial to reduce the interface side reaction of the positive electrode active material, thereby improving charging/discharging capacity elaboration and cycle performance of the positive electrode active material.
In addition, since the positive electrode active material of the present application has the above-mentioned specific chemical composition and water content, it effectively inhibits the formation of sodium hydroxide layer without electrochemical activity due to irreversible chemical reactions on the surface of particles, and reduces the loss of reversible sodium ions, thereby improving the capacity retention rate of the positive electrode active material. At the same time, the positive electrode active material is stable to air and carbon dioxide, which effectively inhibits the formation of sodium carbonate layer without electrochemical activity due to irreversible chemical reactions on the surface of particles, and reduces the loss of reversible sodium ions, thereby further improving the capacity retention rate of the positive electrode active material.
Since the formation of sodium hydroxide and sodium carbonate layers on the surface of the positive electrode active material particles is effectively inhibited, the hindrance to the diffusion of sodium ions and electrons is prevented, the reaction between a positive electrode active material, a binder and an electrolyte is reduced, and the corrosion effect of the positive electrode active material on the positive electrode current collector is effectively inhibited, thereby improving the electrochemical performance and safety performance of the positive electrode.
Therefore, the positive electrode active material of the present application can have a higher charging/discharging capacity performance, cycle performance, and safety performance. The sodium ion battery adopting the positive electrode active material can thus obtain a higher charging/ discharging capacity elaboration, cycle performance and safety performance. The apparatus of this application includes the sodium ion battery provides in this application so that it at least has the same advantages as the said sodium ion battery.

**DESCRIPTION OF THE DRAWINGS**

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of an embodiment of a sodium ion battery.
Fig. 2 is an exploded view of Fig. 1.

Fig. 3 is a schematic diagram of an embodiment of battery module.
Fig. 4 is a schematic diagram of an embodiment of battery pack.
Fig. 5 is an exploded view of Fig. 4.
Fig. 6 is a schematic diagram of an embodiment of an apparatus using the sodium ion battery as a power source.

## DETAILED DESCRIPTION

In order to make the objectives, technical solutions and beneficial technical effects of the present application clearer, the present application will be further described in detail below in conjunction with embodiments. It should be understood that the embodiments described in this specification are only for explaining the application, not intending to limit the application.

For the sake of brevity, only certain numerical ranges are explicitly disclosed herein. However, any lower limit may be combined with any upper limit to form a range that is not explicitly described; and any lower limit may be combined with other lower limits to form an unspecified range, and any upper limit may be combined with any other upper limit to form an unspecified range. Further, although not explicitly specified, each point or single value between the endpoints of the range is included in the range.

In the description herein, it should be noted that, unless otherwise specified, a numeric range described with the term "above" or "below" includes the lower or upper limit itself, and "more" in "one or more" means two or more.

The above summary of the present application is not intended to describe each disclosed embodiment or every implementation in this application. The following description illustrates exemplary embodiments more specifically. In many places throughout the application, guidance is provided through a series of examples, which can be used in various combinations. In each instance, the enumeration is only a representative group and should not be interpreted as exhaustive.

## Positive Electrode Active Material

Firstly, the positive electrode active material in the first aspect of this application is described. This positive electrode active material satisfies the chemical formula disclosed in claims 1 and 2 and may have a water content of 800ppm. Herein, 1 ppm (1 part per million) means that 1 gram of water contained in 1,000,000 grams of positive electrode active material.

The positive electrode active material provided by the present application having the above-mentioned specific chemical composition and water content, enables the ion and electron migration in the inner side of the positive electrode active material to be less hindered, so that the positive electrode active material has relatively high ion conductivity and electron conductivity, and the positive electrode active material is beneficial to reduce the side reaction at the interface of the positive electrode active material. Thus, the charging/ discharging capacity elaboration and cycle performance of the positive electrode active material are further improved. More preferably, the positive electrode active material also has higher dynamic performance and rate performance.

In addition, since the positive electrode active material of the present application has the above-mentioned specific chemical composition and water content, it effectively inhibits the formation of sodium hydroxide layer without electrochemical activity due to irreversible chemical reactions on the surface of particles, and reduces the loss of reversible sodium ions, thereby improving the capacity retention rate of the positive electrode active material. At the same time, the positive electrode active material is stable to air and carbon dioxide, which effectively inhibits the formation of sodium carbonate layer without electrochemical activity due to irreversible chemical reactions on the surface of particles, and reduces the loss of reversible sodium ions, thereby further improving the capacity retention rate of the positive electrode active material.

Since the formation of a sodium hydroxide layer on the surface of the particles is effectively inhibited, a bimolecular elimination reaction of hydroxide ions as a basic group with CF and CH bonds of the binder is prevented, and the increase of brittleness of the positive electrode plate is inhibited due to the formation of carbon-carbon double bonds, which can greatly reduce the probability of the positive electrode plate being broken, improve mechanical performance of the positive electrode plate, and further improve the working stability and safety performance of batteries. In addition, since the increase of carbon-carbon double bonds in the binder is inhibited, the viscosity of the slurry is prevented from increasing due to addition of a binder with excessively high viscosity and the slurry is avoided from gelling, so that the quality of the slurry is improved, and the quality of the positive electrode plate and the consistency of the preparation process are improved.

Since the formation of a sodium hydroxide layer on the surface of the particles is effectively inhibited, the reaction of sodium hydroxide with electrolyte salts in the electrolyte is also prevented, and the consumption of sodium ions in the electrolyte is reduced, thereby improving the capacity retention rate of batteries. In addition, the amount of hydrogen fluoride gas as produced is reduced, thereby avoiding the damage of the solid electrolyte interface (SEI) membrane caused by hydrogen fluoride, further reducing the consumption of electrolyte and sodium ions, and further increasing the battery capacity retention rate and improving cycle performance. Since the generation of hydrogen fluoride gas is reduced, the corrosion to the internal metal parts of batteries caused by acidic hydrogen fluoride is also reduced, thereby improving the structural stability and safety performance of batteries.

Since the formation of a sodium carbonate layer on the surface of the particles is effectively inhibited, the decomposition of sodium carbonate to produce carbon dioxide gas during the battery charging process is prevented, which is beneficial to maintain a low pressure inside batteries, and further prevent the deformation of the battery core due to increased internal stress and the phenomenon such as swelling and leakage, therefore the battery maintains high electrochemical performance and safety performance.

Since the formation of sodium hydroxide and sodium carbonate layers on the surface of the positive electrode active material particles is effectively inhibited, the hindrance to the diffusion of sodium ions and electrons is prevented, and the corrosion effect of the positive electrode active material on the positive electrode current collector is effectively inhibited, so that the positive electrode behave with a good electrochemical performance and the positive electrode plate maintains a good mechanical stability, thereby ensuring that the battery has a good charging/discharging performance and safety performance.

Therefore, the positive electrode active material of the present application can have a higher charging/discharging capacity performance, cycle performance, and safety performance.

The sodium ion battery adopting the positive electrode active material can thus obtain a higher charging/discharging capacity elaboration, cycle performance and safety performance.

In some embodiments, the specific surface area of the positive electrode active material is $5m^2/g$. The specific surface area of the positive electrode active material can improve the stability of the positive electrode active material to air, water and carbon dioxide, and reduce the side reaction activity of the electrolyte on the surface of the positive electrode active material, thereby better producing the above effects and improving the charging/ discharging capacity elaboration, cycle performance and safety performance of the positive electrode.

In some embodiments, the average particle size $D_v50$ of the positive electrode active material is 8 $\mu$m or 10 $\mu$m. The particle size of the positive electrode active material enables the diffusion and transmission path between sodium ions and electrons to be relatively short, and the positive electrode active material to have improved ionic and electronic conductivity, thereby improving the electrochemical dynamic performance and rate performance during its charging/discharging process. This positive electrode active material also reduces the positive polarization phenomenon, which enables the batteries to have higher specific capacity, coulomb efficiency and cycle performance. In addition, the particle size of the positive electrode active material is such that the area of the positive electrode active material in contact with the environment during production, storage and use is appropriately reduced, the reaction activity between the particles and the water and carbon dioxide in the environment can be reduced and the side reaction between the particles and the electrolyte is reduced so as to conducive to the preparation process of the slurry and the electrode plate, thereby enabling the battery using it to have higher electrochemical performance and safety performance. The particle size of the positive electrode active material can also effectively inhibit the agglomeration between the positive electrode active material particles in the positive electrode active material layer and ensure that the battery has higher rate performance and cycle performance.

The specific surface area of positive electrode active material is of the meaning known in this field and can be measured by the known instruments and methods in this field. For example, it can be tested by the analysis test method of nitrogen adsorption specific surface area and calculated by BET (Brunauer Emmett Teller) method in which the analysis test method of nitrogen absorption specific surface area can be carried out by the Tri StarII specific surface and pore analyzer from Micromeritics, USA.

The average particle size of positive electrode active material $D_v50$ is of the meaning known in this field and can be measured by the instruments and methods known in this field. For example, it can be conveniently measured by a laser particle size analyzer, such as the Mastersizer 3000 laser particle size analyzer of Malvern Instrument, UK.

The water content of the positive electrode active material can be measured using instruments and methods known in the art. As an example, the positive electrode active material is dried in a vacuum oven, and the mass of the dried positive electrode active material is weighed and denoted as q1. The above operation is usually carried out in a drying room. Then the positive electrode active material is put into a penicillin bottle for sealing, and the Karl Fischer moisture meter is used to measure the water content of the positive electrode active material, recorded as p1 in which the temperature of the instrument is elevated to 170°C. Finally, the water content p of the positive electrode active material is calculated according to p=p1/q1.

The shape of positive electrode active material can be measured by the instruments and methods known in this field. For example, it can be detected by a field emission scanning electron microscope, such as SIGMA 500 high-resolution field emission scanning electron microscope of Karl Zeiss AG, Germany.

The tap density of positive electrode active material can be measured by the instruments and methods known in this field. For example, it can be measured conveniently by a tap density tester, such as the FZS4-4B tap density tester.

The compaction density of positive electrode active material can be measured by the instruments and methods known in this field. For example, it can be measured conveniently by an electron pressure tester, such as the UTM7305 electron pressure tester.

In the following, the preparation method of the positive electrode active material provided in the second aspect of this application will be introduced. According to this preparation method, the said positive electrode active material can be obtained. The preparation method of the positive electrode active material provided by the present application includes the steps defined in claims 7 and 8.

As different reactants have different dissociation intensities in a solvent and a same reactant has different dissociation intensities in different solvents, the reaction rate is affected, including crystal nucleation and growth rate, further the chemical composition, specific surface area, particle size, shape, and crystal structure of the transitional metal source are affected, and finally the chemical composition, specific surface area, particle size, shape, and crystal structure of the positive electrode active material are affected.

Reactants having different concentrations in the reaction solution, on the one hand, enables the reactants to have different dissociation rates, thereby affecting the reaction rate, on the other hand, directly affects the reaction rate, thereby affecting the chemical composition and structure of the transitional metal source, and finally affecting the chemical composition and structure of the positive electrode active material.

In the reaction system, the type and concentration of precipitant affect its reaction rate with metal ions, and the type and concentration of complexing agent significantly affect the crystal nucleation and growth of the transitional metal source, which both affect the chemical composition and structure of the transitional metal source.

The pH value of the reaction system affects the precipitation rate of every metal ion, thereby directly affecting the crystal nucleation and growth rate of the transitional metal source, further affecting the chemical composition and structure of the transitional metal source, and finally affecting the chemical composition and structure of the positive electrode active material. In order to achieve the positive electrode active material in this application, the pH value of the reaction solution is controlled to be 11.2.

In addition, the temperature of the reaction system directly affects the chemical reaction rate and the reaction yield and the reaction time affects the growth process of reaction products, thereby affecting the chemical composition and structure of the reaction products. The reaction tempearture is 50°C, the reaction time is 30 hours.

The stirring rate during the reaction affects the mixing uniformity of materials so that it has an important influence on the effect of complexation and precipitation, and further affects the structure of the transitional metal source. The The abbreviation "rpm", refers to round per minute, which characterizes the number of revolution of the stirring equipment per minute.

The temperature and time of sintering affect the specific surface area, particle size, shape, and crystal structure of the reaction products. The temperature of sintering is 900°C, the time of sintering is 15 hours.

During the preparation process of positive electrode active material of the present application, by comprehensively controlling the type and content of reactants, pH value, the type and concentration of precipitant, the type and concentration of complexing agent, reaction temperature, stirring rate, reaction time, and sintering temperature and time enables the positive electrode active material to have a specific chemical composition and structure stated in this application, which can greatly improve the electrochemical performance of the positive electrode active material. By adopting the positive active material may improve the specific capacity, cycle performance, and safety performance of the sodium ion battery.

## Positive Electrode Plate

This application also provides a positive electrode plate comprising a positive electrode current collector and a positive electrode active material layer disposed on the positive electrode current collector. For example, the positive electrode current collector has two opposite surfaces and the positive electrode active material layer is laminated on either or both of the two surfaces of the positive electrode current collector.

In some embodiments, a metal foil, a carbon-coated metal foil, or a porous metal sheet can be adopted for the positive electrode current collector, preferably, an aluminum foil.

The positive electrode active material layer includes the positive electrode active material in the first aspect of this application. The positive electrode active material in the positive electrode active material layer is one or more of $Na_{0.88}Cu_{0.22}Fe_{0.28}Mn_{0.47}Mg_{0.03}O_2$ and $Na_{0.88}Cu_{0.22}Fe_{0.28}Mn_{0.47}Al_{0.03}O_2$.

In some examples, the positive electrode active material layer can also include a binder. As an example, the binder can include one or more of styrene-butadiene rubber (SBR), water-based acrylic resin, sodium carboxymethyl cellulose (CMC-Na), polyvinylidene fluoride (PVDF), polytetrafluoroethylene (PTFE), ethylene-vinyl acetate copolymer (EVA) and polyvinyl alcohol (PVA).

In some examples, the positive electrode active material layer can also include a conductive agent. The conductive agent can include one or more of super-conductive carbon, acetylene black, carbon black, ketjen black, carbon dot, carbon nanotubes, graphene, and carbon nanofiber.

The positive electrode plate can be prepared according to the conventional method in this field. Usually, the positive electrode plate is obtained by dispersing the positive electrode active material and optional conductive agent and binder in a solvent (e.g., N-methyl-2-pyrrolidone. NMP for short) to form an uniform positive electrode slurry, coating a positive electrode current collector with the positive electrode slurry and then carrying out the processes of drying and cold pressing.

As the positive electrode plate of this application adopts the positive electrode active material in the first aspect of this application, it has a relatively high comprehensive electrochemical performance and safety performance.

## Sodium ion Battery

In a third aspect, this application provides a sodium ion battery including the said positive electrode plate containing one or more positive electrode active materials of this application.

Sodium ion battery also includes a negative electrode plate, a separator, and an electrolyte.

In some embodiments, the negative electrode plate can be a metallic sodium sheet.

In some embodiments, the negative electrode plate can include a negative electrode current collector and a negative electrode active material layer disposed on the negative electrode current collector. For example, the negative electrode current collector has two opposite surfaces and the negative electrode active material layer is laminated on either or both of the two surfaces of the negative electrode current collector.

In some embodiments, a metal foil, a carbon-coated metal foil, a porous metal sheet, and other materials can be adopted for the negative electrode current collector, preferably, a copper foil.

The negative electrode active material layer includes a negative electrode active material, which can be the known negative electrode active material in this field. As an example, the negative electrode active material can include, but is not limited to, one or more of natural graphite, artificial graphite, mesocarbon microbeads (MCMB), hard carbon, and soft carbon.

In some embodiments, the negative electrode active material layer can also include a conductive agent, which can be the known conductive agent used for battery negative electrode in this field. As an example, the conductive agent can include, but is not limited to, one or more of super-conductive carbon, acetylene black, carbon black, ketjen black, carbon dot, carbon nanotubes, graphene, and carbon nanofiber.

In some embodiments, the negative electrode active material layer can also include a binder, which can be the known binder used for battery negative electrode in this field. As an example, the binder can include, but is not limited to, one or more of styrene-butadiene rubber (SBR), water-based acrylic resin, and sodium carboxymethyl cellulose (CMC-Na).

In some examples, the negative electrode active material layer can also include a thickening agent, which can be the known thickening agent used for battery negative electrode in this field. As an example, the thickening agent can be or include sodium carboxymethyl cellulose (CMC-Na).

The said negative electrode plate can be prepared according to the conventional method in this field. Usually, the negative electrode plate is obtained by dispersing the negative electrode active material and optional conductive agent, binder and thickener in a solvent in which the solvent may be deionized water to form an uniform negative electrode slurry, coating a negative electrode current collector with the negative electrode slurry and then carrying out the processes of drying and cold pressing.

There is no special restriction on the separator. Any known porous separator with electrochemical stability and chemical stability can be selected, for example, glass fiber, non-woven fabrics, polyethylene, polypropylene, polyvinylidene dichloride, and their multi-layer composite film.

In some embodiments, the electrolyte can include an organic solvent and an electrolyte sodium salt. As an example, the organic solvent can include one or more of ethylene carbonate (EC), propylene carbonate (PC), ethyl methyl carbonate (EMC) and diethyl carbonate (DEC). The electrolyte sodium salt can include one or more of $NaPF_6$, $NaClO_4$, $NaBCl_4$, $NaSO_3CF_3$, and $Na(CH_3)C_6H_4SO_3$.

As the sodium ion battery of this application adopts the positive electrode active material in the first aspect of this application, it has a relatively high comprehensive electrochemical performance, including relatively high first-cycle specific discharge capacity and energy density, as well as relatively high cycle performance and safety performance.

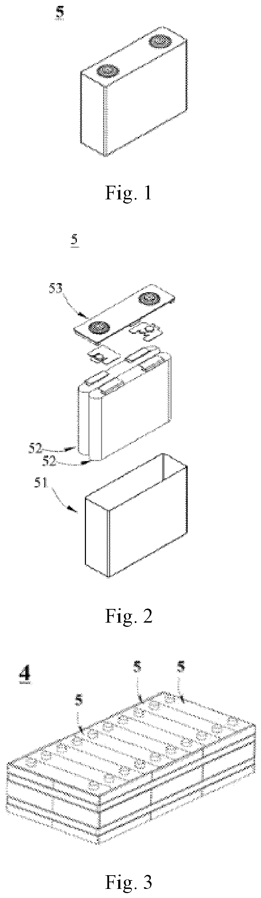

The present application does not have particular limitation to the shape of the sodium ion battery. The sodium ion battery may be cylindrical, square, or in other arbitrary shape. Fig. 1 shows a sodium ion battery 5 with a square structure as an example.

In some embodiments, the sodium ion battery may include an outer package for packaging the positive electrode plate, the negative electrode plate, and the electrolyte.

In some embodiments, the outer package of the sodium ion battery may be a soft bag, such as a pocket type soft bag. The material of the soft bag may be plastic, for example, it may include one or more of polypropylene (PP), polybutylene terephthalate (PBT), polybutylene succinate (PBS), and the like. The outer package of the sodium ion battery may also be a hard case, such as a hard plastic case, an aluminum case, a steel case, and the like.

In some embodiments, referring to Fig. 2, the outer package may include a shell 51 and a cover plate 53. The shell 51 may include a bottom plate and side plates connected to the bottom plate, and the bottom plate and the side plates enclose a receiving cavity. The shell 51 has an opening communicated with the receiving cavity, and the cover plate 53 can cover the opening to close the receiving cavity.

The positive electrode plate, the negative electrode plate, and the separator may form an electrode assembly 52 by stacking or winding. The electrode assembly 52 is packaged in the receiving cavity. The electrolyte may adopt electrolyte liquid, and the electrolyte liquid infiltrates the electrode assembly 52.

The sodium ion battery 5 includes one or more electrode assemblies 52, which can be adjusted according to requirements.

In some embodiments, the sodium ion batteries may be assembled into a battery module, the battery module may include a plurality of secondary batteries, and the specific number can be adjusted according to the application and capacity of the battery module.

Fig. 3 shows a battery module 4 as an example. Referring to Fig. 3, in the battery module 4, the plurality of sodium ion batteries 5 may be arranged sequentially in a length direction of the battery module 4. Of course, they may also be arranged in any other way. Further, a plurality of sodium ion batteries 5 may be fixed by fasteners.

Optionally, the battery module 4 may further include a housing having a receiving space, and a plurality of secondary batteries 5 are received in the receiving space.

In some embodiments, the above-mentioned battery module may also be assembled into a battery pack, and the number of battery modules included in the battery pack can be adjusted according to the application and capacity of the battery pack.

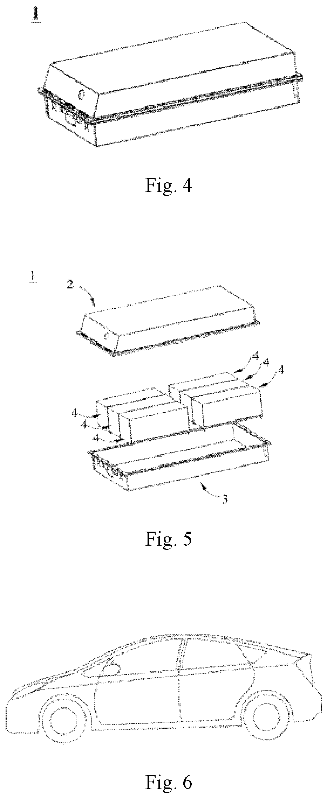

Figs. 4 and 5 show a battery pack 1 as an example. Referring to Figs. 4 and 5, the battery pack 1 may include a battery case and a plurality of battery modules 4 disposed in the battery case. The battery case includes an upper case body 2 and a lower case body 3. The upper case body 2 can cover the lower case body 3 to form a closed space for receiving the battery modules 4. A plurality of battery modules 4 can be arranged in the battery cabinet in any manner.

## Apparatus

The fourth aspect of the present application provides an apparatus, the apparatus including the sodium ion battery according to the third aspect of the present application. The sodium ion battery can be used as a power source of the apparatus, or as an energy storage unit of the apparatus. The apparatus may be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The apparatus may select the sodium ion battery, the battery module, or the battery pack according to its usage requirements.

Fig. 6 shows an apparatus as an example. The apparatus is a pure electric vehicle, a hybrid electric vehicle, or a plug-in hybrid electric vehicle. In order to meet the requirements of the apparatus for high power and high energy density of the sodium ion battery, a battery pack or a battery module may be used.

As another example, the apparatus may be a mobile phone, a tablet computer, a notebook computer, and the like. The apparatus is generally required to be thin and light, and the sodium ion battery can be used as a power source.

## Examples

The following examples more specifically describe the content disclosed in the present application, and these examples are only used for explanatory description, because various modifications and changes within the scope of the present disclosure are obvious to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

## Example 1 (not according to the invention)

### Preparation of positive electrode active material

S10. Copper sulfate, ferrous sulfate and manganese sulfate were dissolved in a deionized water in a stoichiometric ratio under the protection of inert atmosphere to prepare a mixed solution, in which the total concentration of metal ions was 1.5 mol/L.

S21. Sodium hydroxide as a precipitant was dispersed in a deionized water to prepare a solution of precipitant, in which the concentration of sodium hydroxide was 4mol/L. An ammonia with a concentration of 1mol/L was used as a solution of complexing agent.

S22. The solution of precipitant and the solution of complexing agent were added to the above mixed solution to obtain a reaction solution, and the pH value of the reaction solution was controlled to 11.2.

S30. The reaction solution was carried out reaction for 30h at a temperature of 60°C with a stirring rate of 800rpm, the resulting coprecipitation product was isolated and collected. After that, the product was washed several times with an appropriate amount of deionized water, and was dried at 100°C in a vacuum drying oven to obtain a transitional metal source $Cu_{0.24}Fe_{0.29}Mn_{0.47}](OH)_2$.

S40. Sodium carbonate and the transitional metal source were mixed uniformly in a molar ratio of 0.92: 1 to obtain a mixture, and the mixture was sintered at a temperature of 960°C under an air atmosphere for 15h. After that, the sintered product was cooled to room temperature, and then washed several times with an appropriate amount of deionized water followed by drying to obtain the positive electrode active material.

Preparation of button battery

1) Preparation of positive electrode plate

The positive electrode active material prepared above, conductive black Super P, and PVDF as a binder at a weight ratio of 90:5:5 were mixed in an appropriate amount of N-methyl pyrrolidone (NMP) to form a uniform positive electrode slurry; and the positive electrode slurry was coated on an aluminum foil as a positive electrode current collector. After drying, it was stamped into a wafer with a diameter of 14mm.

2) Preparation of negative electrode plate

A metallic sodium sheet was stamped into a wafer with a diameter of 14mm.

3) Fiberglass film was used as a separator.

4) Preparation of electrolyte

Ethylene carbonate (EC) and propylene carbonate (PC) were mixed in an equal volume to get an organic solvent, and sodium perchlorate $NaClO_4$ was dissolved in the said organic solvent to obtain the electrolyte, in which the concentration of $NaClO_4$ was 1mol/L. 5) The said positive electrode plate, separator, and negative electrode plate were stacked in order in which the said electrolyte was added and which was sealed to obtain the button battery.

**Examples 2 to 17 (Examples 2 to 15 not according to the invention) and Comparative Example 1**

Examples 2 to 17 and Comparative Example 1 are similar to example 1 with the exception that the reaction parameters for the preparation process of positive electrode active material were adjusted. Refer to Table 1 below for the specific parameters.

Test section

Test of capacity elaboration and cycle performance

At a temperature of 25°C and under the normal pressure of 0.1MPa, the sodium ion batteries prepared by the examples and comparative examples were charged at a constant current to 4.05V at a rate of 0.1C, where the charge capacity at this time was recorded as the first-cycle charge capacity of sodium ion battery; after set standing for 5min, they were discharged at a constant current to 2.5V at a rate of 0.1C, and then set standing for 5min. This was a charging/discharging cycle. At this time, the discharge capacity was recorded as a first-cycle discharge specific capacity of the sodium-ion battery, which was the initial capacity of the sodium-ion battery. The sodium ion battery was subjected to the above charging/discharging cycle test for 100 cycles, and the specific discharge capacity at the 100th cycle was detected.

The capacity retention rate of the sodium ion battery for 100 cycles (%) = the specific discharge capacity at the $100^{th}$ cycle/the specific discharge capacity at the first cycle $\times$ 100%.

The test results of Examples 1 to 17 (Ex. 1- 17) and Comparative Examples 1 to 2 (CEx. 1-2) were shown in Table 2 below.

| | Copper salt | Iron salt | Mg salt | M salt | Total concentration of metal ions mol/L | Type and concentration of precipitant | Type and concentration of complexing agent | pH | Reaction temperature and time | Sintering temperature and time |
|---|---|---|---|---|---|---|---|---|---|---|
| Ex. 1 | Copper sulfate | Ferrous sulfate | Manganese sulfate | / | 1.5 | 4 mol/L Sodium hydroxide | 1 mol/L Ammonia | 11.2 | 60°C 30 h | 960°C 15 h |
| Ex. 2 | Copper sulfate | Ferrous sulfate | Manganese sulfate | / | 1.5 | 4 mol/L Sodium hydroxide | 1 mol/L Ammonia | 11.2 | 60°C 30 h | 940°C 15 h |
| Ex. 3 | Copper sulfate | Ferrous sulfate | Manganese sulfate | / | 1.5 | 4 mol/L Sodium hydroxide | 1 mol/L Ammonia | 11.2 | 60°C 30 h | 920°C 15 h |
| Ex. 4 | Copper sulfate | Ferrous sulfate | Manganese sulfate | / | 1.5 | 4 mol/L Sodium hydroxide | 1 mol/L Ammonia | 11.2 | 50°C 30 h | 920°C 15 h |
| Ex. 5 | Copper sulfate | Ferrous sulfate | Manganese sulfate | / | 1.5 | 4 mol/L Sodium hydroxide | 1 mol/L Ammonia | 11.2 | 50°C 30 h | 900°C 15 h |
| Ex. 6 | Copper sulfate | Ferrous sulfate | Manganese sulfate | / | 1.5 | 4 mol/L Sodium hydroxide | 1 mol/L Ammonia | 11.2 | 50°C 30 h | 880°C 15 h |
| Ex. 7 | Copper sulfate | Ferrous sulfate | Manganese sulfate | / | 1.5 | 4 mol/L Sodium hydroxide | 1 mol/L Ammonia | 11.2 | 50°C 20 h | 880°C 12 h |
| Ex. 8 | Copper sulfate | Ferrous sulfate | Manganese sulfate | / | 1.5 | 4 mol/L Sodium hydroxide | 1 mol/L Ammonia | 11.2 | 50°C 20 h | 860°C 12 h |
| Ex. 9 | Copper sulfate | Ferrous sulfate | Manganese sulfate | / | 1.5 | 4 mol/L Sodium hydroxide | 1 mol/L Ammonia | 11.2 | 50°C 20 h | 820°C 12 h |
| Ex. 10 | Copper sulfate | Ferrous sulfate | Manganese sulfate | / | 1.5 | 4 mol/L Sodium hydroxide | 1 mol/L Ammonia | 11.2 | 50°C 20 h | 800°C 12 h |
| Ex. 11 | Copper nitrate | Ferrous nitrate | Manganese nitrate | / | 0.5 | 2 mol/L Sodium hydroxide | 0.5 mol/L Ammonium Carbonate | 11.0 | 50°C 30 h | 900°C 15 h |
| Ex. 12 | Copper nitrate | Ferrous nitrate | Manganese nitrate | / | 1 | 2 mol/L Sodium hydroxide | 1 mol/L Ammonium Bicarbonate | 11.0 | 50°C 30 h | 900°C 15 h |
| Ex. 13 | Copper nitrate | Ferrous nitrate | Manganese nitrate | / | 2 | 6 mol/L Sodium hydroxide | 1 mol/L Urea | 11.4 | 50°C 30 h | 900°C 15 h |

(continued)

| | Copper salt | Iron salt | Mg salt | M salt | Total concentration of metal ions mol/L | Type and concentration of precipitant | Type and concentration of complexing agent | pH | Reaction temperature and time | Sintering temperature and time |
|---|---|---|---|---|---|---|---|---|---|---|
| Ex. 14 | Copper nitrate | Ferrous nitrate | Manganese nitrate | / | 3 | 8 mol/L Sodium hydroxide | 2 mol/L Ammonia | 11.4 | 50°C 30 h | 900°C 15 h |
| Ex. 15 | Copper nitrate | Ferrous nitrate | Manganese nitrate | / | 1 | 2 mol/L Sodium hydroxide | 1 mol/L Ammonia | 11.0 | 50°C 30 h | 900°C 15 h |
| Ex. 16 | Copper sulfate | Ferrous sulfate | Manganese sulfate | Magnesium Sulfate | 1.5 | 4 mol/L Sodium hydroxide | 1 mol/L Ammonia | 11.2 | 50°C 30 h | 900°C 15 h |
| Ex. 17 | Copper sulfate | Ferrous sulfate | Manganese sulfate | Aluminum sulfate | 1.5 | 4 mol/L Sodium hydroxide | 1 mol/L Ammonia | 11.2 | 50°C 30 h | 900°C 15 h |
| CEx. 1 | Copper sulfate | Ferrous sulfate | Manganese sulfate | / | 4 | 10 mol/L Sodium hydroxide | 8 mol/L Ammonia | 11.9 | 50°C 30 h | 800°C 15 h |
| CEx. 2 | Copper nitrate | Ferrous nitrate | Manganese nitrate | / | 4 | 10 mol/L Sodium hydroxide | 8 mol/L Ammonia | 11.5 | 50°C 30 h | 900°C 13 h |

Table 2

| | Positive electrode active material | Water content ppm | Specific surface area $m^2/g$ | $D_v50$ $\mu m$ | First-cycle specific discharge capacity mAh/g | capacity retention rate of the sodium ion battery for 100 cycles % |
|---|---|---|---|---|---|---|
| Example 1 | $Na_{0.88}Cu_{0.24}Fe_{0.29}Mn_{0.47}O_2$ | 10 | 5 | 9 | 107 | 96 |
| Example 2 | $Na_{0.88}Cu_{0.24}Fe_{0.29}Mn_{0.47}O_2$ | 50 | 5 | 9 | 106 | 96 |
| Example 3 | $Na_{0.88}Cu_{0.24}Fe_{0.29}Mn_{0.47}O_2$ | 300 | 5 | 8 | 104 | 95 |
| Example 4 | $Na_{0.88}Cu_{0.24}Fe_{0.29}Mn_{0.47}O_2$ | 600 | 5 | 7 | 104 | 94 |
| Example 5 | $Na_{0.88}Cu_{0.24}Fe_{0.29}Mn_{0.47}O_2$ | 800 | 5 | 7 | 103 | 94 |
| Example 6 | $Na_{0.88}Cu_{0.24}Fe_{0.29}Mn_{0.47}O_2$ | 1000 | 5 | 7 | 103 | 92 |
| Example 7 | $Na_{0.88}Cu_{0.24}Fe_{0.29}Mn_{0.47}O_2$ | 1500 | 5 | 5 | 103 | 91 |
| Example 8 | $Na_{0.88}Cu_{0.24}Fe_{0.29}Mn_{0.47}O_2$ | 2000 | 5 | 5 | 100 | 91 |
| Example 9 | $Na_{0.88}Cu_{0.24}Fe_{0.29}Mn_{0.47}O_2$ | 4000 | 5 | 4 | 98 | 90 |
| Example 10 | $Na_{0.88}Cu_{0.24}Fe_{0.29}Mn_{0.47}O_2$ | 6000 | 5 | 4 | 97 | 90 |
| Example 11 | $Na_{0.88}Cu_{0.24}Fe_{0.29}Mn_{0.47}O_2$ | 800 | 0.01 | 30 | 95 | 88 |
| Example 12 | $Na_{0.88}Cu_{0.24}Fe_{0.29}Mn_{0.47}O_2$ | 800 | 0.5 | 22 | 97 | 89 |
| Example 13 | $Na_{0.88}Cu_{0.24}Fe_{0.29}Mn_{0.47}O_2$ | 800 | 15 | 1 | 96 | 90 |
| Example 14 | $Na_{0.88}Cu_{0.24}Fe_{0.29}Mn_{0.47}O_2$ | 800 | 25 | 0.5 | 93 | 87 |
| Example 15 | $Na_{0.71}Cu_{0.22}Fe_{0.30}Mn_{0.48}O_2$ | 800 | 5 | 6 | 98 | 93 |
| Example 16 | $Na_{0.88}Cu_{0.22}Fe_{0.28}Mn_{0.47}Mg_{0.03}O_2$ | 800 | 5 | 8 | 102 | 96 |
| Example 17 | $Na_{0.88}Cu_{0.22}Fe_{0.28}Mn_{0.47}Al_{0.03}O_2$ | 800 | 5 | 10 | 101 | 95 |
| Comparative Example 1 | $Na_{0.88}Cu_{0.24}Fe_{0.29}Mn_{0.47}O_2$ | 7000 | 30 | 0.3 | 65 | 51 |
| Comparative Example 2 | $Na_{0.71}Cu_{0.22}Fe_{0.30}Mn_{0.48}O_2$ | 8000 | 30 | 0.6 | 61 | 47 |

By comparing Examples of 1-17 with Comparative Examples of 1-2, it can be seen that, since the positive electrode active material of Comparative Examples 1 to 2 has a higher water content, the positive electrode active material had a higher reaction activity with the electrolyte and carbon dioxide in the environment, and had more side reactions, and the migration of ions and electrons in the particles was hindered significantly, thereby deteriorating the capacity and cycle performance of the sodium ion battery severely. Nevertheless, the positive electrode active material in Examples 1-17 had a water content of below 6000 ppm, which water content was low, the stability of the positive electrode active material to air and carbon dioxide was high, the oxidation activity of the positive electrode active material to electrolyte was low, and the migration of ions and electrons inside the particles was less hindered, so that the positive electrode active material had higher ion conductivity and conductivity, thereby enabling the sodium ion battery using the positive electrode active material of the present application to have significantly improved capacity elaboration and cycle performance.

## Claims

1. A positive electrode active material, satisfying a chemical formula of $Na_{0.88}Cu_{0.22}Fe_{0.28}Mn_{0.47}Mg_{0.03}O_2$

wherein the positive electrode active material is prepared by a method comprising the following steps of providing a mixed solution by dissolving copper sulfate, ferrous sulfate, manganese sulfate and magnesium sulfate in a deionized water in a stoichiometric ratio under the protection of inert atmosphere, in which the total concentration is 1.5 mol/L;

adding an aqueous sodium hydroxide solution in a concentration of 4 mol/L and aqueous ammonia in a concentration of 1 mol/L to the mixed solution to obtain a reaction solution, and then subjecting it to coprecipitation by controlling pH of the reaction solution to 11.2 and reacting at a temperautre of 50°C with a stirring rate of 800rpm for 30 hours, and then isolating, collecting and washing the resulting co-precipitation product several times with an appropriate amount of deionized water, then drying it at 100°C in a vacuum drying oven to obtain a transition metal source; and mixing the transition metal source and sodium carbonate in a molar ratio of 0.92:1 to obtain a mixture and sintering the mixture at a temperature of 900°C under an air atmosphere for 15 hours, and then cooling the resulting sintered product to room temperature, and then washing it several times with an appropriate amount of deionized water followed by drying to obtain the positive electrode active material.

2. A positive electrode active material, satisfying a chemical formula of $Na_{0.88}Cu_{0.22}Fe_{0.28}Mn_{0.47}Al_{0.03}O_2$

wherein the positive electrode active material is prepared by a method comprising the following steps of providing a mixed solution by dissolving copper sulfate, ferrous sulfate, manganese sulfate and aluminum sulfate in a deionized water in a stoichiometric ratio under the protection of inert atmosphere, in which the total concentration is 1.5 mol/L;

adding an aqueous sodium hydroxide solution in a concentration of 4 mol/L and aqueous ammonia in a concentration of 1 mol/L to the mixed solution to obtain a reaction solution, and then subjecting it to coprecipitation by controlling pH of the reaction solution to 11.2 and reacting at a temperautre of 50°C with a stirring rate of 800rpm for 30 hours, and then isolating, collecting and washing the resulting co-precipitation product several times with an appropriate amount of deionized water, then drying it at 100°C in a vacuum drying oven to obtain a transition metal source; and mixing the transition metal source and sodium carbonate in a molar ratio of 0.92:1 to obtain a mixture and sintering the mixture at a temperature of 900°C under an air atmosphere for 15 hours, and then cooling the resulting sintered product to room temperature, and then washing it several times with an appropriate amount of deionized water followed by drying to obtain the positive electrode active material.

3. The positive active material according to claim 1 or 2, wherein the positive active material has a specific surface area of 5 $m^2/g$.

4. The positive active material according to claim 1 or 2, wherein the positive electrode active material has a water content of 800 ppm.

5. The positive active material according to claim 1, wherein the positive active material has an average particle size Dv50 of 8 $\mu$m.

6. The positive active material according to claim 2, wherein the positive active material has an average particle size Dv50 of 10 $\mu$m.

7. A method for preparing a positive electrode active material satisfying a chemical formula of $Na_{0.88}Cu_{0.22}Fe_{0.28}Mn_{0.47}Mg_{0.03}O_2$, comprising the following steps:

providing a mixed solution by dissolving copper sulfate, ferrous sulfate, manganese sulfate and magnesium sulfate in a deionized water in a stoichiometric ratio under the protection of inert atmosphere, in which the total concentration is 1.5 mol/L;

adding an aqueous sodium hydroxide solution in a concentration of 4 mol/L and aqueous ammonia in a concentration of 1 mol/L to the mixed solution to obtain a reaction solution, and then subjecting it to coprecipitation by controlling pH of the reaction solution to 11.2 and reacting at a temperautre of 50°C with a stirring rate of 800rpm for 30 hours, and then isolating, collecting and washing the resulting co-precipitation product several times with an appropriate amount of deionized water, then drying it at 100°C in a vacuum drying oven to obtain a transition metal source; and mixing the transition metal source and sodium carbonate in a molar ratio of 0.92:1 to obtain a mixture and sintering the mixture at a temperature of 900°C under an air atmosphere for 15 hours, and then cooling the resulting sintered product to room temperature, and then washing it several times with an appropriate amount of deionized water followed by drying to obtain the positive electrode active material.

8. A method for preparing a positive electrode active material satisfying a chemical formula of $Na_{0.88}Cu_{0.22}Fe_{0.28}Mn_{0.47}Al_{0.03}O_2$, comprising the following steps:

providing a mixed solution by dissolving copper sulfate, ferrous sulfate, manganese sulfate and aluminum sulfate in a deionized water in a stoichiometric ratio under the protection of inert atmosphere, in which the total concentration is 1.5 mol/L;
adding an aqueous sodium hydroxide solution in a concentration of 4 mol/L and aqueous ammonia in a concentration of 1 mol/L to the mixed solution to obtain a reaction solution, and then subjecting it to coprecipitation by controlling pH of the reaction solution to 11.2 and reacting at a temperautre of 50°C with a stirring rate of 800rpm for 30 hours, and then isolating, collecting and washing the resulting co-precipitation product several times with an appropriate amount of deionized water, then drying it at 100°C in a vacuum drying oven to obtain a transition metal source; and mixing the transition metal source and sodium carbonate in a molar ratio of 0.92:1 to obtain a mixture and sintering the mixture at a temperature of 900°C under an air atmosphere for 15 hours, and then cooling the resulting sintered product to room temperature, and then washing it several times with an appropriate amount of deionized water followed by drying to obtain the positive electrode active material.

9. A sodium-ion battery (5), comprising a positive electrode plate, wherein the positive electrode plate comprises the positive electrode active material according to any one of claims 1-6.

10. An apparatus, comprising the sodium-ion battery (5) according to claim 9.

**Patentansprüche**

1. Ein Positivelektrodenaktivmaterial, das die chemische Formel $Na_{0.88}Cu_{0.22}Fe_{0.28}Mn_{0.47}Mg_{0.03}O_2$ erfüllt, wobei das Positivelektrodenaktivmaterial durch ein Verfahren hergestellt wird, das die folgenden Schritte umfasst:

Bereitstellen einer gemischten Lösung durch Auflösen von Kupfersulfat, Eisensulfat, Mangansulfat und Magnesiumsulfat in entionisiertem Wasser in einem stöchiometrischen Verhältnis unter dem Schutz einer inerten Atmosphäre, wobei die Gesamtkonzentration 1,5 mol/l beträgt;
Zugabe einer wässrigen Natriumhydroxidlösung in einer Konzentration von 4 mol/L und wässriger Ammoniaklösung in einer Konzentration von 1 mol/L zu der gemischten Lösung, um eine Reaktionslösung zu erhalten, und dann Unterziehen dieser einer Kopräzipitation, indem der pH-Wert der Reaktionslösung auf 11,2 eingestellt wird und bei einer Temperatur von 50 °C mit einer Rührgeschwindigkeit von 800 U/min 30 Stunden lang reagiert wird, und dann Isolieren, Sammeln und mehrmaliges Waschen des resultierenden Mitfällungsprodukts mit einer geeigneten Menge entionisiertem Wasser, dann Trocknen bei 100 °C in einem Vakuumtrockenofen, um eine Übergangsmetallquelle zu erhalten; und Mischen der Übergangsmetallquelle und Natriumcarbonat in einem Molverhältnis von 0,92:1, um eine Mischung zu erhalten, und Sintern der Mischung bei einer Temperatur von 900 °C unter einer Luftatmosphäre für 15 Stunden und dann Abkühlen des resultierenden gesinterten Produkts auf Raumtemperatur und dann Mehrmaliges Waschen mit einer geeigneten Menge entionisiertem Wasser und dann Trocknen, um das Positivelektrodenaktivmaterial zu erhalten.

2. Ein Positivelektrodenaktivmaterial, das die chemische Formel $Na_{0.88}Cu_{0.22}Fe_{0.28}Mn_{0.47}Al_{0.03}O_2$ erfüllt, wobei das Positivelektrodenaktivmaterial durch ein Verfahren hergestellt wird, das die folgenden Schritte umfasst:

Bereitstellen einer gemischten Lösung durch Auflösen von Kupfersulfat, Eisensulfat, Mangansulfat und Aluminiumsulfat in entionisiertem Wasser in einem stöchiometrischen Verhältnis unter dem Schutz einer inerten Atmosphäre, wobei die Gesamtkonzentration 1,5 mol/l beträgt;
Zugabe einer wässrigen Natriumhydroxidlösung in einer Konzentration von 4 mol/L und wässriger Ammoniaklösung in einer Konzentration von 1 mol/L zu der gemischten Lösung, um eine Reaktionslösung zu erhalten, und dann Unterziehen dieser einer Kopräzipitation, indem der pH-Wert der Reaktionslösung auf 11,2 eingestellt wird und bei einer Temperatur von 50 °C mit einer Rührgeschwindigkeit von 800 U/min 30 Stunden lang reagiert wird, und dann Isolieren, Sammeln und mehrmaliges Waschen des resultierenden Mitfällungsprodukts mit einer geeigneten Menge entionisiertem Wasser, dann Trocknen bei 100 °C in einem Vakuumtrockenofen, um eine Übergangsmetallquelle zu erhalten; und Mischen der Übergangsmetallquelle und Natriumcarbonat in einem Molverhältnis von 0,92:1, um eine Mischung zu erhalten, und Sintern der Mischung bei einer Temperatur von 900 °C unter einer Luftatmosphäre für 15 Stunden und dann Abkühlen des resultierenden gesinterten Produkts auf Raumtemperatur und dann Mehrmaliges Waschen mit einer geeigneten Menge entionisiertem Wasser und dann Trocknen, um das Positivelektrodenaktivmaterial zu erhalten.

3. Das positive Aktivmaterial nach Anspruch 1 oder 2, wobei das positive Aktivmaterial eine spezifische Oberfläche von 5 $m^2$/g aufweist.

4. Das positive Aktivmaterial nach Anspruch 1 oder 2, wobei das Positivelektrodenaktivmaterial einen Wassergehalt von 800 ppm aufweist.

5. Das positive Aktivmaterial nach Anspruch 1, wobei das positive Aktivmaterial eine durchschnittliche Partikelgröße Dv50 von 8 $\mu$m aufweist.

6. Das positive Aktivmaterial nach Anspruch 2, wobei das positive Aktivmaterial eine durchschnittliche Partikelgröße Dv50 von 10 $\mu$m aufweist.

7. Ein Verfahren zur Herstellung eines Positivelektrodenaktivmaterials, das die chemische Formel $Na_{0.88}Cu_{0.22}Fe_{0.28}Mn_{0.47}Mg_{0.03}O_2$ erfüllt, umfassend die folgenden Schritte:

> Bereitstellen einer gemischten Lösung durch Auflösen von Kupfersulfat, Eisensulfat, Mangansulfat und Magnesiumsulfat in entionisiertem Wasser in einem stöchiometrischen Verhältnis unter dem Schutz einer inerten Atmosphäre, wobei die Gesamtkonzentration 1,5 mol/l beträgt;
> Zugabe einer wässrigen Natriumhydroxidlösung in einer Konzentration von 4 mol/L und wässriger Ammoniaklösung in einer Konzentration von 1 mol/L zu der gemischten Lösung, um eine Reaktionslösung zu erhalten, und dann Unterziehen dieser einer Kopräzipitation, indem der pH-Wert der Reaktionslösung auf 11,2 eingestellt wird und bei einer Temperatur von 50 °C mit einer Rührgeschwindigkeit von 800 U/min 30 Stunden lang reagiert wird, und dann Isolieren, Sammeln und mehrmaliges Waschen des resultierenden Mitfällungsprodukts mit einer geeigneten Menge entionisiertem Wasser, dann Trocknen bei 100 °C in einem Vakuumtrockenofen, um eine Übergangsmetallquelle zu erhalten; und Mischen der Übergangsmetallquelle und Natriumcarbonat in einem Molverhältnis von 0,92:1, um eine Mischung zu erhalten, und Sintern der Mischung bei einer Temperatur von 900 °C unter einer Luftatmosphäre für 15 Stunden und dann Abkühlen des resultierenden gesinterten Produkts auf Raumtemperatur und dann Mehrmaliges Waschen mit einer geeigneten Menge entionisiertem Wasser und dann Trocknen, um das Positivelektrodenaktivmaterial zu erhalten.

8. Ein Verfahren zur Herstellung eines Positivelektrodenaktivmaterials, das die chemische Formel $Na_{0.88}Cu_{0.22}Fe_{0.28}Al_{0.47}Mg_{0.03}O_2$ erfüllt, umfassend die folgenden Schritte:

> Bereitstellen einer gemischten Lösung durch Auflösen von Kupfersulfat, Eisensulfat, Mangansulfat und Aluminiumsulfat in entionisiertem Wasser in einem stöchiometrischen Verhältnis unter dem Schutz einer inerten Atmosphäre, wobei die Gesamtkonzentration 1,5 mol/l beträgt;
> Zugabe einer wässrigen Natriumhydroxidlösung in einer Konzentration von 4 mol/L und wässriger Ammoniaklösung in einer Konzentration von 1 mol/L zu der gemischten Lösung, um eine Reaktionslösung zu erhalten, und dann Unterziehen dieser einer Kopräzipitation, indem der pH-Wert der Reaktionslösung auf 11,2 eingestellt wird und bei einer Temperatur von 50 °C mit einer Rührgeschwindigkeit von 800 U/min 30 Stunden lang reagiert wird, und dann Isolieren, Sammeln und mehrmaliges Waschen des resultierenden Mitfällungsprodukts mit einer geeigneten Menge entionisiertem Wasser, dann Trocknen bei 100 °C in einem Vakuumtrockenofen, um eine Übergangsmetallquelle zu erhalten; und Mischen der Übergangsmetallquelle und Natriumcarbonat in einem Molverhältnis von 0,92:1, um eine Mischung zu erhalten, und Sintern der Mischung bei einer Temperatur von 900 °C unter einer Luftatmosphäre für 15 Stunden und dann Abkühlen des resultierenden gesinterten Produkts auf Raumtemperatur und dann Mehrmaliges Waschen mit einer geeigneten Menge entionisiertem Wasser und dann Trocknen, um das Positivelektrodenaktivmaterial zu erhalten.

9. Natrium-Ionen-Batterie (5), umfassend eine positive Elektrodenplatte, wobei die positive Elektrodenplatte das Positivelektrodenaktivmaterial nach einem der Ansprüche 1-6 umfasst.

10. Vorrichtung, umfassend die Natrium-Ionen-Batterie (5) nach Anspruch 9.

**Revendications**

1. Matériau actif d'électrode positive, satisfaisant à une formule chimique de $Na_{0.88}Cu_{0.22}Fe_{0.28}Mn_{0.47}Mg_{0.03}O_2$ dans lequel le matériau actif d'électrode positive est préparé selon un procédé comprenant les étapes suivantes :

   fournir une solution mélangée en dissolvant le sulfate de cuivre, le sulfate de fer, le sulfate de manganèse et le sulfate de magnésium dans l'eau déminéralisée dans un rapport stoechiométrique sous atmosphère inerte protectrice, dans lequel la concentration totale est de 1,5 mol/L ;
   ajouter une solution aqueuse d'hydroxyde de sodium à concentration de 4 mol/L et l'ammoniac aqueux à concentration de 1 mol/L à la solution mélangée pour obtenir une solution réactionnelle, puis traiter par coprécipitation en contrôlant le pH de la solution réactionnelle à 11,2 et laisser réagir à une température de 50°C sous agitation à vitesse de 800 t/min pendant 30 heures, puis isoler, collecter et laver le produit de coprécipitation résultant plusieurs fois avec une quantité appropriée d'eau déminéralisée, puis le sécher à 100°C dans une étuve de séchage sous vide pour obtenir une source de métal de transition ; et mélanger la source de métal de transition et le carbonate de sodium dans un rapport molaire de 0,92 : 1 pour obtenir un mélange et fritter le mélange à une température de 900°C sous atmosphère d'air pendant 15 heures, puis refroidir le produit fritté résultant à température ambiante, puis le laver plusieurs fois avec une quantité appropriée d'eau déminéralisée, et sécher pour obtenir le matériau actif d'électrode positive.

2. Matériau actif d'électrode positive, satisfaisant à une formule chimique de $Na_{0.88}Cu_{0.22}Fe_{0.28}Mn_{0.47}Al_{0.03}O_2$ dans lequel le matériau actif d'électrode positive est préparé selon un procédé comprenant les étapes suivantes :

   fournir une solution mélangée en dissolvant le sulfate de cuivre, le sulfate de fer, le sulfate de manganèse et le sulfate d'aluminium dans l'eau déminéralisée dans un rapport stoechiométrique sous atmosphère inerte protectrice, dans lequel la concentration totale est de 1,5 mol/L ;
   ajouter une solution aqueuse d'hydroxyde de sodium à concentration de 4 mol/L et l'ammoniac aqueux à concentration de 1 mol/L à la solution mélangée pour obtenir une solution réactionnelle, puis traiter par coprécipitation en contrôlant le pH de la solution réactionnelle à 11,2 et laisser réagir à une température de 50°C sous agitation à vitesse de 800 t/min pendant 30 heures, puis isoler, collecter et laver le produit de coprécipitation résultant plusieurs fois avec une quantité appropriée d'eau déminéralisée, puis le sécher à 100°C dans une étuve de séchage sous vide pour obtenir une source de métal de transition ; et mélanger la source de métal de transition et le carbonate de sodium dans un rapport molaire de 0,92 : 1 pour obtenir un mélange et fritter le mélange à une température de 900°C sous atmosphère d'air pendant 15 heures, puis refroidir le produit fritté résultant à température ambiante, puis le laver plusieurs fois avec une quantité appropriée d'eau déminéralisée, et sécher pour obtenir le matériau actif d'électrode positive.

3. Matériau actif positif selon la revendication 1 ou 2, dans lequel le matériau actif positif présente une surface spécifique de 5 $m^2$/g.

4. Matériau actif positif selon la revendication 1 ou 2, dans lequel le matériau actif d'électrode positive présente une teneur en eau de 800 t/min ppm.

5. Matériau actif positif selon la revendication 1, dans lequel le matériau actif positif présente une taille moyenne des particules Dv50 de 8 $\mu$m.

6. Matériau actif positif selon la revendication 2, dans lequel le matériau actif positif présente une taille moyenne des particules Dv50 de 10 $\mu$m.

7. Procédé pour préparer un matériau actif d'électrode positive satisfaisant à une formule chimique de $Na_{0.88}Cu_{0.22}Fe_{0.28}Mn_{0.47}Mg_{0.03}O_2$, comprenant les étapes suivantes :

   fournir une solution mélangée en dissolvant le sulfate de cuivre, le sulfate de fer, le sulfate de manganèse et le sulfate de magnésium dans l'eau déminéralisée dans un rapport stoechiométrique sous atmosphère inerte protectrice, dans lequel la concentration totale est de 1,5 mol/L ;
   ajouter une solution aqueuse d'hydroxyde de sodium à concentration de 4 mol/L et l'ammoniac aqueux à concentration de 1 mol/L à la solution mélangée pour obtenir une solution réactionnelle, puis traiter par coprécipitation en contrôlant le pH de la solution réactionnelle à 11,2 et laisser réagir à une température de 50°C sous agitation à vitesse de 800 t/min pendant 30 heures, puis isoler, collecter et laver le produit de coprécipitation résultant plusieurs fois avec une quantité appropriée d'eau déminéralisée, puis le sécher à 100°C dans une étuve de séchage sous vide pour obtenir une source de métal de transition ; et mélanger la source de métal de transition et le carbonate de sodium dans un rapport molaire de 0,92 : 1 pour obtenir un mélange et fritter le mélange à une température de 900°C sous atmosphère d'air pendant 15 heures, puis refroidir le produit fritté résultant à température ambiante, puis le laver plusieurs fois avec une quantité appropriée d'eau déminéralisée, et sécher pour obtenir le matériau actif d'électrode positive.

8. Procédé pour préparer un matériau actif d'électrode positive satisfaisant à une formule chimique de $Na_{0.88}Cu_{0.22}Fe_{0.28}Mn_{0.47}Al_{0.03}O_2$, comprenant les étapes suivantes :

fournir une solution mélangée en dissolvant le sulfate de cuivre, le sulfate de fer, le sulfate de manganèse et le sulfate d'aluminium dans l'eau déminéralisée dans un rapport stœchiométrique sous atmosphère inerte protectrice, dans lequel la concentration totale est de 1,5 mol/L ;

ajouter une solution aqueuse d'hydroxyde de sodium à concentration de 4 mol/L et l'ammoniac aqueux à concentration de 1 mol/L à la solution mélangée pour obtenir une solution réactionnelle, puis traiter par coprécipitation en contrôlant le pH de la solution réactionnelle à 11,2 et laisser réagir à une température de 50°C sous agitation à vitesse de 800 t/min pendant 30 heures, puis isoler, collecter et laver le produit de coprécipitation résultant plusieurs fois avec une quantité appropriée d'eau déminéralisée, puis le sécher à 100°C dans une étuve de séchage sous vide pour obtenir une source de métal de transition ; et mélanger la source de métal de transition et le carbonate de sodium dans un rapport molaire de 0,92 : 1 pour obtenir un mélange et fritter le mélange à une température de 900°C sous atmosphère d'air pendant 15 heures, puis refroidir le produit fritté résultant à température ambiante, puis le laver plusieurs fois avec une quantité appropriée d'eau déminéralisée, et sécher pour obtenir le matériau actif d'électrode positive.

9. Batterie au lithium-ion (5) comprenant une plaque d'électrode positive, dans laquelle la plaque d'électrode positive comprenant le matériau actif d'électrode positive selon l'une quelconque des revendications 1 à 6.

10. Appareil comprenant la batterie au lithium-ion (5) selon la revendication 9.

**5**

Fig. 1

**5**

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3048659 A1